# FASCICULE DE BREVET EUROPEEN

(11) **EP 0 876 419 B1**
(45) Date de publication et mention de la délivrance du brevet: **05.07.2000**
(21) Numéro de dépôt: 97901656.5
(22) Date de dépôt: 23.01.1997
(51) Int. Cl.: C08G 77/06

(54) **PROCEDE DE PREPARATION DE POLYORGANOSILOXANES PAR HYDROLYSE D'ORGANOHALOSILANES**
VERFAHREN ZUR HERSTELLUNG VON POLYORGANOSILOXANEN DURCH HYDROLYSE VON ORGANOHALOSILANEN
METHOD FOR PREPARING POLYORGANOSILOXANES BY HYDROLYSING ORGANOHALOSILANES

(30) Priorité: 24.01.1996 FR 9601027
(43) Date de publication de la demande: 11.11.1998
(73) Titulaire: RHODIA CHIMIE, 92408 Courbevoie Cédex (FR)
(72) Inventeur: DOGUET, Loic, F-38550 Péage-de-Roussillon (FR); FOMPEYRINE, Patricia, F-69110 Sainte-Foy-les-Lyon (FR); FOUCHER, Etienne, Princeton, NJ 08540 (US); LEISING, Frédéric, F-60300 Azilly-Saint-Léonard (FR)
(74) Mandataire: Trolliet, Maurice
(86) Numéro de dépôt international: FR9700131
(87) Numéro de publication internationale: WO9727239

(56) Documents cités:
- EP-A- 0 524 526
- EP-A- 0 658 588
- DD-A- 227 145
- GB-A- 2 087 915

## Description

La présente invention relève d'un principe élémentaire de la chimie des silicones, à savoir l'hydrolyse d'halosilanes et plus particulièrement d'organohalosilanes pour obtenir des poly(organo)siloxanes. Cette synthèse est fondée sur la très grande réactivité à l'eau des liaisons ≡ Si - Cl et, dans une moindre mesure, des liaisons = SiOR (R = alkyle).

Les organohalosilanes sont donc transformés par hydrolyse et polycondensation (homo et hétéro condensation) en polyorganosiloxanes intermédiaires (oligoorganosiloxanes) de structure linéaire ou cyclique, eux-mêmes polymérisables et réticulables en huiles silicones ou en élastomères silicones de plus haut poids moléculaire.

Le diméthyldichlorosilane est un organohalosilane bien connu comme produit de départ de cette réaction d'hydrolyse / condensation.

Les procédés techniques faisant intervenir ladite réaction d'hydrolyse / condensation de Me₂SiCl₂ fonctionnent en continu et sont parfaitement rodés sur le plan industriel. Cela est décrit, par exemple, par H.K. Lichtenwalner et M.M. Sprung, dans Encyclopedia of Polymer science Vol. 12 Wiley and Sons, New-York, 1970.

L'hydrolyse de Me₂SiCl₂ conduit à un mélange complexe d'oligoorganosiloxanes cycliques et linéaires. Classiquement, la source d'eau réactionnelle nécessaire à l'hydrolyse, est formée par une solution d'acide chlorhydrique. Pour rentabiliser au mieux ce procédé, l'acide chlorhydrique formé par hydrolyse est récupéré et peut être ainsi valorisé, par exemple, en étant mis en réaction avec du méthanol pour former du chlorométhane, qui est un produit de base dans la synthèse de diméthyldichlorosilane, selon le procédé de synthèse directe.

Diverses propositions d'hydrolyse d'organohalosilanes, e.g. Me₂SiCl₂, trouvent leur place dans l'art antérieur.

On connaît ainsi par la demande de brevet français N° 2 512 028, un procédé d'hydrolyse d'organohalosilanes, en particulier de Me₂SiCl₂, dans lequel la source d'eau pour l'hydrolyse de l'organohalosilane, est une solution aqueuse d'acide chlorhydrique ayant au moins 35 % en poids de chlorure d'hydrogène, ladite solution étant mise en oeuvre en quantité telle que le rapport molaire *H*_{*2*}*O/organochlorosilane* varie entre 10 et 30. L'hydrolyse se déroule en une seule étape. Les buts ici visés sont, d'une part, une réduction significative du pourcentage pondéral d'halogène (de chlorure) dans l'hydrolysat à base de polyorganosiloxane obtenu, et, d'autre part, l'obtention de meilleurs rendements en cyclopolyorganosiloxanes. Pour des températures réactionnelles comprises entre 20 et 30° C, la concentration de la solution aqueuse d'HCl est inférieure ou égale à 37 % en poids. En tout état de cause, quelle que soit la température, cette solution d'HCl n'est jamais saturée dans les exemples de cette demande de brevet N°2 512 028.

L'inconvénient d'une telle hydrolyse en présence d'un excès d'eau conduit à d'importantes quantités d'acide chlorhydrique aqueux. Or, étant donné que l'HCl le plus facilement valorisable est l'HCl gazeux, il est nécessaire de mettre en oeuvre une distillation de l'HCl aqueux, laquelle est particulièrement dispendieuse.

En outre, l'hydrolyse en présence d'un excès d'eau est extrêmement exothermique, ce qui entraîne inévitablement des difficultés opératoires.

L'invention couverte par la demande de brevet français N° 2 518 099, a pour vain objectif de pallier ces inconvénients, en mettant en oeuvre une quantité pratiquement stoechiométrique d'eau, pour l'hydrolyse en une étape du diméthyldichlorosilane. Cela, permet d'obtenir de l'acide chlorhydrique anhydre (gazeux), une solution aqueuse saturée d'acide chlorhydrique et un hydrolysat de polyorganosiloxane. Si l'HCl aqueux de fin d'hydrolyse est saturé, il ressort des exemples que ce n'est nullement le cas pour la solution d'HCl initiale, Cf exemple 3 : 37 % en poids à 60° C. On peut donc en conclure que l'HCl produit à la réaction, n'est pas dégagé en totalité sous forme gazeuse.

L'invention selon le FR-A-2 518 099 vise à éviter les excès d'eau, sans toutefois se placer dans des conditions de déficit en eau, qui sont connues pour donner lieu à des polyorganosiloxanes linéaires, imparfaitement hydrolysés et comprenant des halogènes (chlores) en positions terminales. Ceci est tout à fait pénalisant puisqu'on doit alors finir l'hydrolyse en utilisant de grandes quantités d'eau, ce qui conduit à des effluents d'HCl aqueux particulièrement encombrants et embarrassants, dans la mesure où il est difficile de les recycler et/ou de les retraiter à un moindre coût.

Il n'est pas possible de faire cette hydrolyse complémentaire avec de faibles quantités d'eau, car dans de telles conditions une polycondensation des oligoorganosiloxanes intervient, ce qui a pour conséquence directe une augmentation rédhibitoire de la viscosité.

Plus récemment, le brevet US N° 5 169 970 divulgue un procédé d'hydrolyse d'organochlorosilanes, selon lequel l'hydrolyse s'effectue en deux temps :
- la première étape d'hydrolyse consiste à hydrolyser l'organochlorosilane en mettant en oeuvre une quantité sensiblement stoechiométrique d'eau et produire ainsi un hydrolysat fait de polyorganosiloxanes,
- dans la deuxième étape d'hydrolyse, on soumet l'hydrolysat issu de l'étape 1, à ce même traitement, mais en utilisant cette fois une quantité d'eau en excès stoechiométrique, la source d'eau étant constituée par une solution d'HCl ayant une concentration prédéterminée en HCl.

Ce procédé est censé permettre l'obtention d'un hydrolysat de polyorganosiloxane, sans souffrir des inconvénients des techniques connues à une étape d'hydrolyse, et qui font intervenir soit un excès d'eau, soit un déficit d'eau, soit une quantité stoechiométrique d'eau, par rapport à l'organohalosilane. Ce procédé permettrait également de réguler la viscosité du polyorganosiloxane obtenu.

Ce procédé est imparfait en ce qu'il produit de l'HCl gazeux sous faible pression, ce qui complique la récupération et la valorisation de ce dernier.

Le principe d'une hydrolyse en deux étapes est également retenu dans le procédé de fabrication de polydiméthylsiloxane, décrit dans la demande de brevet européen N° 0 658 588. Selon ce procédé, on fait réagir dans une première étape du diméthyldichlorosilane avec de l'eau, amenée par une solution aqueuse d'acide chlorhydrique titrant 25 % en poids, pour obtenir un hydrolysat brut constitué de polydiméthylsiloxanes cycliques et linéaires α,ω-dichlorés et de gaz chlorhydrique.

Dans une deuxième étape, on traite l'hydrolysat brut à la vapeur d'eau pour réduire sa teneur en chlore par hydrolyse complémentaire, qui entraîne également la formation d'acide chlorhydrique aqueux. Ce dernier est recyclé dans la première étape du procédé.

La pression en gaz chlorhydrique dans la première étape est comprise entre 0,15 et 0,5 MPa, en particulier entre 0,25 et 0,35 MPa. La température de l'étape 1 est la température ambiante, alors que pour l'étape 2, il est fait référence à une température comprise entre 110 et 160° C. Au terme de la première étape d'hydrolyse, le polydiméthylsiloxane obtenu comprend 50 % d'oligomères cycliques et 50 % d'oligomères linéaires α,ω chlorés.

L'utilisation d'un tel titre en HCl dans l'étape d'hydrolyse en étape 1 et d'une température élevée en étape 2, rend difficile la stabilisation et la maîtrise de la viscosité des produits finaux.

La demande de brevet DD-227 145 décrit un procédé de préparation d'hydrolysat de diméthyldichlorosilane neutre, présentant une faible viscosité et une stabilité au stockage, de même qu'une teneur résiduelle en liaisons SiCI inférieure à 10 ppm. Ce procédé comprend un traitement d'élimination des restes de groupements SiCI et d'HCl aqueux contenus dans un hydrolysat de diméthyldichlorosilane, par passage de celui-ci, après lavage et/ou neutralisation, au travers d'un matériau poreux se présentant sous forme de feuille. Ce matériau est un matériau fibreux du type papier ou textile (laine, cellulose, polyester, fibres de verre). Une telle filtration s'opère à température ambiante et permet d'obtenir un hydrolysat présentant une teneur résiduelle en SiCl de 2 ppm et une concentration en HCl non détectable.

Ce procédé de traitement hydrolysat de dichlorodiméthylsilane permet, certes, une réduction des impuretés dans le produit final, mais l'efficacité d'un tel procédé ne peut être vraiment garantie que si les étapes antérieures conduisent à un produit propre à être traité par coalescence sur support poreux.

Or, il n'en va pas ainsi pour l'hydrolysat selon le DD-227 145.

Il ressort de cette revue de l'état de la technique qu'il existe une carence en un procédé de préparation de polyorganosiloxanes par hydrolyse d'organohalosilanes,
- qui permette d'obtenir un produit d'hydrolyse du type halogénure d'hydrogène se présentant sous forme gazeuse et sous pression,
- qui permette l'élimination la plus complète possible des liaisons ≡SiX ;
- qui conduise à un hydrolysat polyorganosiloxane final, exempt ou quasiment exempt de gouttelettes aqueuses acides ;
- qui permette d'éviter la formation de quantités exagérées d'effluents aqueux acides, posant un problème de retraitement,
- qui permette d'assurer un contrôle de la viscosité du polyorganosiloxane,
- et qui enfin permette de fabriquer un polyorganosiloxane de haute qualité et en particulier de haute pureté, de manière à lui garantir une stabilité optimale.

L'un des objectifs essentiels de la présente invention est de pallier cette carence, en fournissant un procédé qui réponde aux spécifications visées ci-dessus.

Un autre objectif essentiel de la présente invention est de fournir un procédé de préparation de polyorganosiloxane, dans lequel l'hydrolyse se déroule en présence d'un déficit d'eau, par rapport aux quantités stochiométriques, dans la phase initiale d'hydrolyse, et qui, en outre, ne nécessite pas l'emploi subséquent de grandes quantités d'eau pour éliminer les restes Si-halogène terminaux, encore présents en trop grande concentration après la première hydrolyse. Cela évite la production d'effluents aqueux halogénés délicats à recycler et/ou à retraiter, en raison des impuretés siloxaniques qu'elles contiennent toujours.

Un autre objectif essentiel de la présente invention est de fournir un procédé de préparation de polyorganosiloxanes par hydrolyse d'organohalosilanes, qui offre la possibilité d'assurer un contrôle constant de la viscosité du milieu réactionnel.

Un autre objectif de la présente invention est de fournir un procédé d'hydrolyse d'organohalosilane conduisant à des polyorganosiloxanes, exempts ou pratiquement exempts d'halogènes résiduels, de même que de gouttelettes aqueuses contenant un soluté formé par l'halogénure d'hydrogène issu de l'hydrolyse.

Un autre objectif essentiel de la présente invention est de fournir un procédé de préparation de polyorganosiloxanes par hydrolyse d'organohalosilanes, qui soit aisé à mettre en oeuvre et économique (hauts niveaux de productivité et de rendement).

Un autre objectif essentiel de la présente invention est de fournir un procédé d'hydrolyse d'organohalosilanes conduisant à des polyorganosiloxanes, lequel procédé se devant d'être apte à être mis en oeuvre selon un mode continu ou discontinu, en satisfaisant dans l'un ou l'autre cas, aux spécifications visées ci-dessus.

Ces objectifs, parmi d'autres, sont atteints par la présente invention qui concerne un procédé de préparation de polyorganosiloxanes par hydrolyse d'organohalosilanes de formule (I) RₐR¹_{b}SiX_{c}, dans laquelle :
- R, R¹ sont des radicaux identiques ou différents et représentent l'hydrogène ou des alkyles linéaires ou ramifiés en C1-C6, des aryles, des alkylaryles ou des aralkyles,
- X représente un halogène,
- et a + b + c =4 et 0 < c <4;
   caractérisé
   - en ce qu'il consiste essentiellement à mettre en oeuvre :
      ■ au moins trois étapes d'hydrolyse successives (1), (2), (3), dans lesquelles le milieu réactionnel est apte à exercer une force hydrolysante croissante sur les organohalosilanes (**I**),
      ■ et, éventuellement, au moins une étape de coalescence (4),
   - et en ce que l'étape (1) est une hydrolyse sous pression en présence d'une solution aqueuse S₁ d'halogénure d'hydrogène saturée, à la pression et à la température du milieu réactionnel.

La Demanderesse a donc eu le mérite de mettre en évidence, que, de manière tout à fait surprenante et inattendue :
- la combinaison, d'une part, d'au moins trois étapes d'hydrolyse successives avec une force hydrolysante croissante et, d'autre part, d'une première étape d'hydrolyse sous pression, avec une phase aqueuse saturée en halogénure d'hydrogène correspondant aux produits d'hydrolyse des liaisons halosilanes ≡SiX,
- permet d'obtenir des polyorganosiloxanes purs, exempts de SiX résiduels et de traces de phase aqueuse.

Un tel résultat est d'autant plus avantageux qu'il peut être atteint de manière relativement aisée et économique, avec une bonne productivité et de bons rendements, selon un mode continu ou discontinu.

En outre, le procédé selon l'invention n'est pas de nature à générer de grandes quantités d'effluents pollués par des halogénures. Cela simplifie donc grandement le procédé au regard de son impact sur l'environnement.

Il doit être également relevé que le problème du contrôle de la viscosité du milieu réactionnel, qui découle d'ailleurs directement de la maîtrise du titre en halogénure d'hydrogène, est résolu grâce à la méthodologie selon l'invention, qui repose sur la mise en oeuvre d'une force hydrolysante croissante et sur la saturation de la phase aqueuse de départ en halogénure d'hydrogène.

Sans vouloir être lié par la théorie, il est permis de penser que le procédé selon l'invention permet une optimisation de l'hydrolyse en minimisant les phénomènes de blocage de l'eau d'hydrolyse, liés à l'hydratation de l'halogénure d'hydrogène.

Par force hydrolysante croissante, on entend, au sens de la présente invention un gradient de nucléophilie du milieu réactionnel, gradient qui s'étale sur les trois étapes d'hydrolyse (1) (2) et (3). Plus précisément, cela signifie que la réactivité de la phase aqueuse vis-à-vis des liaisons ≡SiX croît au fur et à mesure des étapes 1,2 et 3.

S'agissant de la notion de saturation en halogénure d'hydrogène de la phase aqueuse du milieu réactionnel de l'étape (1), il faut comprendre, au sens de l'invention, que l'on est au maximum de concentration en soluté halogénure d'hydrogène dans l'eau. C'est-à-dire que le milieu réactionnel se trouve dans une atmosphère gazeuse formée par l'halogénure d'hydrogène gazeux.

Il est clair que ce point de saturation dépend naturellement de la nature du soluté ainsi que des conditions de température et de pression du milieu. L'homme du métier est parfaitement à même de gérer cette question de la saturation de la solution S₁ de l'étape (1).

Conformément à un mode préféré de mise en oeuvre du procédé selon l'invention, on adopte un mode de fonctionnement en continu.

Par ailleurs, sans que cela ne soit limitatif, l'halogène X est de préférence le chlore, de sorte que l'halogénure produit dans ce cas est HCl. Pour simplifier on emploiera indifféremment dans la suite du présent exposé, halogène X ou chlore (Cl) ainsi qu'halogénure d'hydrogène (HX) et chlorure d'hydrogène (HCl).

De préférence, l'étape (1) d'hydrolyse sous pression se décompose en :
Δ au moins une hydrolyse (1₁) d'organohalosilanes (**I**) conduisant à un hydrolysat brut au moins triphasique comprenant :
   - une phase gazeuse formée par l'halogénure d'hydrogène gazeux sous pression,
   - un fluide siloxane F₁ constitué essentiellement d'oligomères linéaires α,ω-dihalogénés et éventuellement, dans une moindre mesure, d'oligomères cycliques,
   - et une phase aqueuse comportant la solution S₁ saturée d'halogénure d'hydrogène ;
Δ au moins une séparation (1₂) Gaz/Liquide visant à recueillir l'halogénure d'hydrogène gazeux sous pression d'une part, et un mélange F₁/S₁ d'autre part ;
Δ au moins une séparation (1₃) Liquide / Liquide permettant de récupérer F₁ et S₁, cette dernière étant avantageusement recyclée en (1₁);
Δ éventuellement au moins une purification (1₄) du gaz recueilli en (1₂), de préférence par condensation ;
Δ et éventuellement au moins un dégazage (1₅) supplémentaire du fluide F₁ recueilli en (1₃), de préférence par décompression.

Avantageusement, cette réaction (1₁) se déroule en continu sous forte agitation dans une enceinte close, par exemple à une température comprise entre 10 et 50° C et sous une pression déterminée par le gaz d'halogénure d'hydrogène produit par hydrolyse. En pratique, la pression en halogénure d'hydrogène gazeux, est ajustée à une valeur supérieure ou égale à 0,10 MPa et de préférence comprise entre 0,15 et 1 MPa.

On règle les débits d'entrée des réactifs du réacteur de l'étape (1₁), de telle sorte que le rapport massique de phase à l'alimentation RM₁ *= phase aqueuse / organohalosilane (**I**)* soit ≥ 2 et de préférence compris entre 3 et 15.

Ce RM est l'une des caractéristiques importantes du procédé selon l'invention, car il détermine conjointement avec la concentration en halogénure d'hydrogène de la phase aqueuse et avec le régime d'agitation (entre autres), la concentration en eau à l'interface phase aqueuse / organohalosilane (**I**). Et la force hydrolysante du milieu est, bien évidemment, dépendante de cette concentration interfaciale en eau.

L'hydrolysat brut obtenu en fin d'étape (1₁) est avantageusement triphasique.

En pratique, F₁ est constitué par un mélange d'oligoorganosiloxanes linéaires α,ω-dihalogénés et d'oligoorganosiloxanes cycliques dans lequel :
- les premiers représentent au moins 50, de préférence au moins 60 % en moles du mélange,
- et les seconds au plus 50, de préférence au plus 40 % en moles de mélange.

Ce fluide siloxane F₁ que l'on dénomme également "chlorosilox" renferme, par exemple, environ 8 à 13 % en poids d'halogène résiduel de types HX et ≡SiX.

Avantageusement, la durée de la réaction de l'étape (1₁) est comprise entre 30 s et 5 min, de préférence entre 1 et 2 min.

L'halogénure d'hydrogène gazeux obtenu sous pression à l'issue de l'étape (1₂) de séparation gaz/liquide, peut être utilement valorisé, par exemple s'agissant d'HCl, dans la préparation industrielle (à gros débit) de chlorure de méthyle, par réaction avec du méthanol. Le chlorure de méthyle est une matière première de base dans la chimie des organosilanes.

De manière facultative, on peut purifier le gaz sous pression obtenu en (1₂), grâce à un traitement (1₄), qui peut être, par exemple, une condensation à une température comprise entre 0° C et -10° C, ce qui permet d'éliminer des polysiloxanes légers volatils.

Comme précisé ci-dessus, il est avantageux de recycler la solution chlorhydrique S₁ récupérée à l'issue de la séparation liquide/liquide (1₃). Un tel recyclage dans l'étape (1₁) influe sur la qualité de l'huile ou du fluide siloxane final. Suivant une disposition préférée de l'invention, le recyclage constitue la voie unique ou très majoritaire d'alimentation en solution chlorhydrique S₁ de la réaction de l'étape (1₁). En conséquence, le rapport massique de recyclage de S₁ sur (I) sera, dans cette hypothèse, équivalent au RM₁ ci-dessus défini, c'est-à-dire supérieur ou égal à 2, et de préférence compris entre 3 et 15 ou très voisin de RM₁.

L'éventuel dégazage (1₅) de F₁ est réalisé, par exemple, par l'intermédiaire d'une décompression flash avec un ΔP de l'ordre de 0,2 MPa, e.g. On récupère ainsi de l'acide chlorhydrique gazeux pouvant être directement revalorisé vers une synthèse industrielle. Un tel dégazage (1₅) permet d'augmenter le rendement en acide chlorhydrique gazeux d'au moins 3 %.

De préférence, l'étape (2) comprend au moins une hydrolyse humide (2₁) se déroulant, sous agitation, à une température comprise entre 10 et 50° C et dans laquelle le fluide siloxane F₁ issu de l'étape (1) est mis à réagir avec une solution aqueuse S₂ d'halogénure d'hydrogène. La concentration de ce soluté dans S₂ correspond à une fraction de la concentration de saturation de référence (Csr), du même soluté dans une solution aqueuse, et ce dans les mêmes conditions de température et de pression, cette fraction représentant 45 à 75 %, de préférence 50 à 72 % de Csr. Le rapport massique de phase à l'alimentation RM₂ *= Phase aqueuse / Fluide F*₁ est régulé à une valeur supérieure ou égale à 1,5, de préférence comprise entre 2 et 10, de manière à permettre l'hydrolyse des liaisons ≡SiX du fluide siloxane F₁, à hauteur d'au moins 95 %, de préférence d'au moins 98 %, et à obtenir ainsi un fluide siloxane F₂ constitué essentiellement d'oligomères linéaires α,ω-dihydroxylés ou α,ω-dihalogénés et, éventuellement, dans une moindre mesure, d'oligomères cycliques.

Dans le cadre de cette étape (2) d'hydrolyse humide, on met en oeuvre une force hydrolysante supérieure à celle de l'étape (1), une telle augmentation étant acquise par accroissement de la part relative de l'eau dans le milieu d'hydrolyse et donc, par diminution du titre en HCl aqueux. Conformément à l'invention, cette hydrolyse humide 2 vise à amener l'avancement de l'hydrolyse des liaisons SiX à une valeur suffisamment proche de 100 %, c'est-à-dire par exemple ≥ à 95 %, de préférence ≥ à 98 %.

Le réglage de la force hydrolysante du milieu hydrolyse de l'étape (2) peut être appréhendé, notamment :
- au travers du titre en HCl, qui est donc avantageusement une fraction de 45 à 75 % de la Csr,
- et au travers de la température.

L'une des caractéristiques originales du procédé selon l'invention est, pour des conditions expérimentales données, de jouer sur le titre en HCl pour ajuster l'avancement de la réaction.

En tout état de cause, ce titre est particulièrement critique, car les chlorosiloxanes hydrolysés dans l'étape (2) comprennent à peu près autant de liaisons ≡SiX que de liaisons ≡SiOH. Cela signifie que les risques de polycondensation sont grands et l'on sait que la conséquence majeure d'une telle réaction, est une augmentation rédhibitoire de la viscosité des polyorganosiloxanes et donc du milieu réactionnel tout entier.

Un autre paramètre important est la durée de réaction entre F₁ et la phase aqueuse S₂, dans l'étape (2₁). Avantageusement, cette durée est comprise entre 4 et 20 min, de préférence entre 7 et 12 min.

Pour l'étape (2₁), il est préférable de maintenir un mélange liquide/liquide homogène, grâce à une agitation importante dans le milieu réactionnel (e.g. réacteur agité ou boucle fermée).

En pratique, le fluide siloxane F₂ - également désigné par le terme "Silox acide" - contient, par exemple, environ 0,6 à 3 % en poids d'halogène résiduel de types HX et ≡SiX.

A titre d'exemple, la concentration en halogénure d'hydrogène dans S₂ est de l'ordre de 30 %, dans les conditions expérimentales données ci-après : la température est égale à 25° C environ et la durée réactionnelle de (2₁) est comprise entre 7 à 12 min.

Suivant une disposition particulière de l'invention, l'étape (2) comporte en outre au moins une opération de séparation (2₂), de préférence par décantation, du fluide siloxane F₂ issu de (2₁) et de la solution aqueuse concentrée S₂, cette dernière étant, avantageusement au moins en partie recyclée dans l'hydrolyse humide (2₁) de l'étape (2) et/ou dans l'hydrolyse sous pression (1₁) de l'étape (1), à titre d'appoint en eau d'hydrolyse.

La séparation (2₂ ) est par exemple une décantation gravitaire.

Les possibilités de recyclage du reliquat de S₂ dans l'étape (1₁) et/ou l'étape (2₁) contribuent à l'économie du procédé selon l'invention.

Le fluide siloxane F₂ issu de l'étape (2) contient encore un peu de liaison ≡SiX à hydrolyser ainsi que des gouttelettes de solution S₂ halogénées (chlorhydriques). Aussi, pour parachever l'hydrolyse et l'épuration, on met ensuite en oeuvre l'étape (3) qui comprend au moins un traitement (3₁) d'hydrolyse poussée du fluide siloxanique F₂ obtenu en (2), à l'aide d'une phase aqueuse en solution aqueuse diluée S₃, dont la teneur en eau est supérieur ou égale à 90 % en poids, de préférence comprise entre 92 et 97 %, les quantités de F₂ et S₃ mises en oeuvre en (3₁) étant ajustées de telle sorte que le rapport massique de phase à l'alimentation RM₃ *= phase aqueuse / Fluide F*₂ *(silox acide)* soit supérieur ou égal à 1,5 et, de préférence soit compris entre 2 et 10.

Quand la teneur en eau est inférieure à 100 %, le complément à 100 de S₃ est alors un soluté. Ledit soluté, qui est présent à raison d'au plus 10 % en poids de la phase aqueuse, et de préférence à raison de 3 à 8 %, comprend majoritairement au moins un sel et éventuellement minoritairement au moins un agent acide ou basique.

Ledit traitement (3₁) permettant ainsi de finir l'hydrolyse des liaisons ≡SiX résiduelles dans F₂, qui se trouve alors transformé en fluide siloxane F₃, constitué essentiellement d'oligomères linéaires α,ω-dihydroxylés et dans une moindre mesure, d'oligomères cycliques.

Avantageusement, le temps de réaction de l'hydrolyse poussée (3₁) est supérieur ou égal à 5 min, de préférence à 10 min. Mais, il va de soi que, de toutes façons, le terme de cette réaction (3₁) dépendra du moment où la totalité des groupes ≡SiX seront hydrolysés. Il appartient à l'homme du métier d'apprécier et de déterminer ce moment, afin de minimaliser la durée du procédé industriel.

Suivant une disposition très préférée de l'invention, la phase aqueuse S₃ comprend un soluté qui est présent à raison de 3 à 8 % en poids de la phase aqueuse et comprend majoritairement au moins un sel et minoritairement de l'HCl.

Conformément à une particularité de l'invention, le ou les sels mis en oeuvre dans le cadre de l'étape (3₁) est choisi dans le groupe suivant : NaCl, LiCl, NaHCO₃, Na₂CO₃.

Ce (ou ces) sel(s) facultatif(s) peut (peuvent) être incorporé(s) directement dans la phase aqueuse S₃ et/ou être générés in situ par neutralisation de tout ou partie de l'halogénure d'hydrogène présent, à l'aide d'au moins un agent basique, de préférence choisi parmi les bases suivantes : NaOH, KOH, LiOH, NaOH étant particulièrement préféré.

La présence d'un sel dont la phase aqueuse, qu'il soit ou non obtenu par neutralisation de l'HCl à l'aide d'une base, permet d'optimiser l'étape de séparation (3₂) (décantation).

Suivant une modalité avantageuse de l'invention, l'étape (3₁) se déroule à une température supérieure ou égale à 60° C, de préférence comprise entre 70 et 100° C et, plus préférentiellement encore entre 80 et 90° C.

Avantageusement, F₃ présente une teneur en halogène résiduel de types HX et ≡SiX inférieure ou égale à 60 ppm, de préférence inférieure ou égale à 30 ppm ; à noter que la teneur en halogène résiduel de type ≡SiX est généralement inférieure à 1 ppm. La réaction est complète.

En pratique, il est avantageux de prévoir une homogénéisation du milieu réactionnel lors de l'étape (3₁) (e.g. réacteur agité ou boucle fermée).

L'étape (3) comporte en sus, au moins une opération de séparation (3₂), de préférence par décantation, du fluide siloxane F₃ issu de (3₁), de la phase aqueuse, cette dernière, une fois récupérée, étant au moins en partie recyclée au moins dans l'étape (3₁) et éventuellement dans l'(ou les) étape(s) (1₁) et/ou (2₁) pour autant que cette phase aqueuse ne comporte pas de sel. Cette décantation permet de recueillir une huile ou un fluide siloxane F₃, dans lequel toutes ou sensiblement toutes les liaisons ≡SiX sont hydrolysées.

Le fluide siloxane F₃ récupéré en fin d'étape (3₂) de séparation, est certes totalement hydrolysé, mais comporte encore des gouttelettes de phase aqueuse.

Aussi, selon une modalité facultative et néanmoins intéressante de l'invention, F₃ est soumis à une étape (4) de coalescence consistant essentiellement à faire passer le fluide F₃ au travers d'un matériau poreux, de façon à extraire les gouttelettes de phase aqueuse acide contenues dans F₃ et à obtenir un fluide siloxane F₄ constitué essentiellement d'oligomères linéaires α,ω-dihydroxylés, ayant une teneur en halogène résiduel inférieure ou égale à 10 ppm, généralement à 2 ppm, et, dans une moindre mesure d'oligomères cycliques (30 %).

Avantageusement, le matériau poreux mis en oeuvre à l'étape (4), est sélectionné dans le groupe de matériaux suivants :
- silices de précipitation,
- supports fibreux tissés ou non par exemple à base de fibres de verre et/ou de fibres polymères (cellulose, polyester, polypropylène), fibres de verre,
- des zéolithes,
- et leurs mélanges.

Suivant une caractéristique originale et avantageuse de l'invention, les fluides siloxane F₃ et le fluide siloxane F₄ exempt de liaisons ≡SiX et ne contenant pratiquement plus de gouttelettes de phase aqueuse, présentent une viscosité à 25° C inférieure ou égale à 50 mPa.s, de préférence à 40 mPa.s, et plus préférentiellement encore comprise entre 25 mPa.s et 35 mPa.s.

Une viscosité aussi faible est particulièrement bienvenue, dans la mesure où cela facilite significativement la manipulation et le traitement des masses traitées dans le procédé. Qui plus est, cela rend parfaitement envisageable et faisable, la succession d'étapes typiques du procédé selon l'invention, pour obtenir in fine un polyorganosiloxane de haute qualité et de haute pureté, comme cela est indiqué supra.

Plus précisément, le traitement de percolation de F₃ au travers d'un support poreux permettant la coalescence des gouttelettes résiduelles de phase aqueuse, s'effectue de préférence selon un flux (débit/unité de surface) de 1 à 10 cm/min et à une température de l'ordre de 50°C , par exemple.

Avantageusement, la teneur finale en oligomères linéaires α,ω-dihalogénés de F₄ est comprise entre 50 et 70 % en poids, le complément étant constitué d'oligoorganosiloxanes cycliques.

Dans la mesure où il a été vu ci-dessus que l'halogène X préféré, dans le cadre de l'invention, est le chlore, on peut préciser, à titre non limitatif, que l'on privilégiera Me₂SiCl₂, MeSiCl₃, ou Me₃SiCl, à titre d'organohalosilane de départ.

Quel que soit le mode de mise en oeuvre du procédé selon l'invention continu ou discontinu, l'homme du métier sera parfaitement à même de sélectionner les appareillages nécessaires (réacteurs fermés ou non, décanteurs, détendeurs, coalesceurs...) pour réaliser un dispositif de mise en oeuvre du procédé considéré.

L'invention sera mieux comprise grâce aux exemples qui suivent, de préparation d'huile F₄ polydiméthylsiloxane, par hydrolyse de diméthyldichlorosilane (Me₂SiCl₂). Ces exemples font bien ressortir tous les avantages et les variantes de mise en oeuvre envisageables pour le procédé selon l'invention.

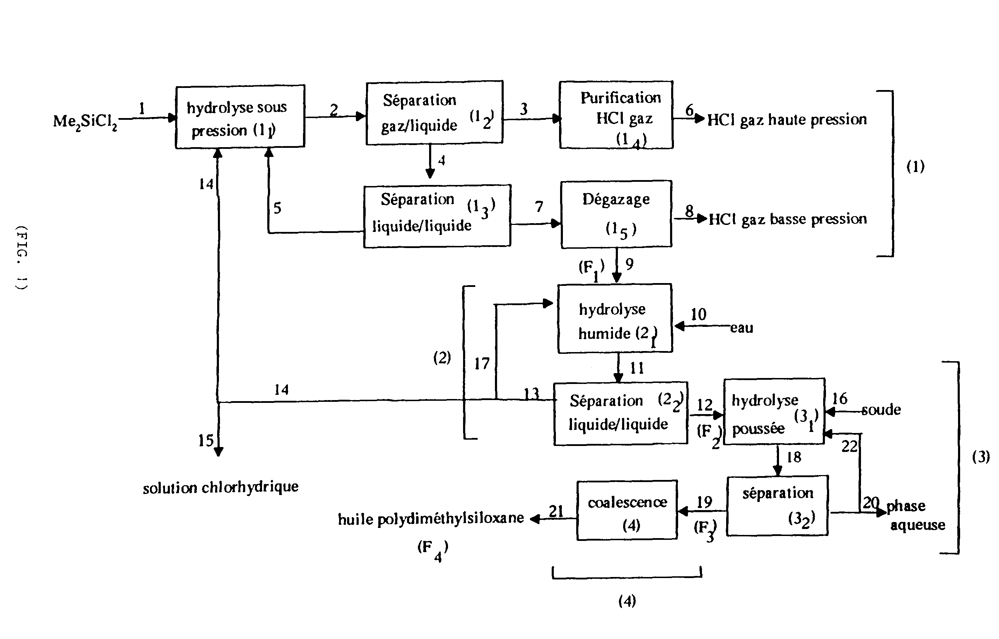

La figure unique annexée montre l'organigramme du procédé pris à titre d'exemple non limitatif, pour illustrer l'invention. Il s'agit d'un procédé fonctionnant en régime continu, dans lequel un flux 1 de Me₂ SiCl₂ est soumis à l'étape (1₁) d'hydrolyse sous pression. Les flux 14 et 5 de solution chlorhydrique S₁ respectivement formés par les solutions d'HCl recyclées S₃ et S₂ des étapes 3 et 2 interviennent eux-aussi directement dans l'hydrolyse (1₁).

Cette dernière produit un hydrolysat brut comprenant un fluide siloxane F₁, de l'HCL gazeux et une phase aqueuse formée par une solution saturée S₁ d'HCl. Cette hydrolysat est représenté par le flux 2, lequel est soumis à l'étape (1₂) de séparation gaz/liquide, qui conduit à un flux gazeux 3 que l'on soumet à une purification (1₄) par condensation à - 5° C ladite purification (1₄) permettant d'obtenir de l'HCl gazeux sous haute pression selon un flux 6. La séparation (1₂) génère également un flux 4 formé par un mélange liquide/liquide que l'on soumet à une séparation (1₃), au terme de laquelle on produit, d'une part, un flux 5 de solution S₁ recyclée dans (1₁) et un flux 7 formé par un fluide siloxane (chlorosilox F₁).

Le chlorosilox F₁ est soumis à un dégazage (1₅) par décompression, ce qui génère un flux gazeux 8 d'HCl basse pression et un flux liquide 9 formé par F₁ dégazé.

Ce dernier est soumis à une hydrolyse humide (2₁), qui requiert un flux 10 d'alimentation en eau et un flux 17 d'alimentation en solution S₂ d'HCl aqueux recyclée. L'hydrolyse humide (2₁) conduit à un flux 11 constitué par un mélange liquide de fluide siloxane F₂ et de solution S₂ d'HCl. Ce flux 11 est soumis à une séparation liquide/liquide (2₂) par décantation. Cela génère d'une part un fluide 13 de solution d'HCl aqueux S₂, se décomposant en flux 17 de recyclage pour l'étape (2₁) et en un flux 14 de recyclage de S₂ pour l'étape (1₁). L'excès de S₂ recyclé par le flux 14 est éliminé via un flux 15. La séparation (2₂) conduit également à un flux 12 correspondant au fluide siloxane F₂, qui est soumis à une hydrolyse poussée (3₁), nécessitant une alimentation par un flux 16 de soude et par un flux 22 de solution aqueuse décantée. Le flux 18 émergeant de l'étape (3₁) est un mélange liquide de polyorganosiloxane et de solution chlorhydrique S₃. Après séparation (3₂), le flux 18 conduit à un flux 20 de solution chlorhydrique S₃ et à un flux 19 de fluide siloxane F₃.

Ce dernier est enfin soumis au traitement de coalescence (4), ce qui génère un flux 21 constitué par le fluide siloxane F₄ ou huile polydiméthylsiloxane débarrassée de la quasi-totalité des gouttelettes d'HCl aqueux.

### EXEMPLE :

### étape 1 :

Dans un ensemble réacteur/dégazeur/décanteur fonctionnant à la pression de service b = 0,3 MPa absolu et à une température T = 30° C, on met en place une alimentation en :
- Me₂SiCl₂ de 1,98 Kg/h,
- en solution d'HCl titrant 26 %, de 0,34 Kg/h,
- en solution aqueuse HCl titrant 44 %, à raison de 23,6 Kg/h,
de telle sorte que le rapport massique d'alimentation des phases aqueuse et siloxanique RM₁ est de 12.

Le chlorosilox ou fluide siloxanique F₁ obtenu à l'issue de l'étape (1₅) est produit à raison de 1,2 Kg/h.

La composition pondérale de F₁ est la suivante :
- 9,7 % de chlore résiduel (de types HCl et ≡SiCl),
- 33 % d'oligoorganosiloxanes cycliques,
- 67 % d'oligoorganosiloxanes linéaires α,ω-chlorés.

Le chlorosilox F₁ présente une viscosité de 4,7 mPa.s.

### étape 2 :

Le fluide siloxanique F₁ est introduit dans un autre ensemble réacteur/décanteur à raison de 1,2 Kg/h. On alimente concomitamment cet ensemble réacteur/décanteur avec de l'eau à raison de 0,31 Kg/h et avec une solution aqueuse d'HCl 28,7 %, à raison de 5 Kg/h, de telle sorte que RM₂ = 4,4.

La pression régnant à l'intérieur du réacteur de l'étape (2) est de 0,1 MPa et la température de l'ordre de 30° C.

Le fluide siloxanique F₂ obtenu à l'issue de l'étape (2₂) (dénommé également silox acide) est produit selon un débit de 1,17 Kg/h. Ce silox acide F₂ comprend 1,3 % en poids de chlore résiduel (de types HCl et ≡SiCl).

La viscosité du silox acide F₂ est de 28 mPa.s à 25° C.

F₂ comprend 37 % en poids de polydiméthylsiloxane cyclique et 63 % en poids de polydiméthylsiloxane α,ω-dichlorés et α,ω-dihydroxylé.

### étape 3 :

Le silox acide F₂ est alimenté dans un ensemble réacteur/décanteur à raison de 1,17 Kg/h, avec une solution aqueuse de soude titrant 3 % en poids de NaOH et selon un débit d'alimentation de 0,46 Kg/h, et avec 4,5 Kg/h de phase aqueuse recyclée issue de l'étape de séparation (3₂).

Le RM₃ = 4,2.

La concentration de NaCl (sel de neutralisation) dans la phase aqueuse est de 4,2 % en poids.

La pression régnant dans l'ensemble réacteur/décanteur est de 0,1 MPa et la température de 85° C.

Le fluide siloxane F₃ obtenu à l'issu de l'étape (3₂) est fourni à raison de 1,14 Kg/h.

Ce fluide siloxane F₃ dénommé également silox neutre comprend 50 ppm de chlore résiduel (de types HCl et ≡SiCl ; la teneur en chlore de type ≡SiCl uniquement étant inférieure à 1 ppm), 37 % en poids de polydiméthylsiloxane cyclique et 63 % en poids de polydiméthylsiloxane linéaire essentiellement α,ω-dihydroxylé.

La viscosité de F₃ est de 37 mPa.s. à 25° C.

### étape 4 :

On fait percoler le siloxane neutre F₃ sur un support poreux constitué par de la silice précipitée ayant des pores de diamètre moyen égal à 350 µ. Le débit d'alimentation en F₃ est de 1,14 Kg/h. La vitesse de migration au travers du support poreux est de 1,5 cm/min. La pression est de 0,1 MPa et la température de 20° C.

Le polydiméthylsiloxane F₄ obtenu et produit à raison de 1,14 Kg/h. Il comprend 1 ppm de chlore total résiduel et est constitué par 63 % en poids de polydiméthylsiloxane linéaire α,ω-dihydroxylé et 37 % en poids de polydiméthylsiloxane cyclique.

La viscosité de F₄ est de 37 mPa.s à 25° C.

## Revendications

1. Procédé de préparation de polyorganosiloxanes par hydrolyse d'organohalosilanes de formule (I) RₐR¹_{b}SiX_{c}, dans laquelle
- R, R¹ sont des radicaux identiques ou différents et représentant l'hydrogène ou des alkyles linéaires ou ramifiés en C1-C6, des aryles, des alkylaryles ou des aralkyles,
- X représente un halogène,
- et a + b + c = 4 et 0 < c < 4 ;
caractérisé
• en ce qu'il consiste à mettre en oeuvre :
■ au moins trois étapes d'hydrolyse successives (1), (2), (3), dans lesquelles le milieu réactionnel est apte à exercer une force hydrolysante croissante sur les organohalosilanes (I) en augmentant la réactivité de la phase aqueuse vis-à-vis des liaisons ≡SiX au fur et à mesure des étapes d'hydrolyse,
■ et, éventuellement, au moins une étape de coalescence (4),
• et en ce que : l'étape (1) est une hydrolyse sous pression en présence d'une solution S₁ aqueuse d'halogénure d'hydrogène saturée, à la pression et à la température du milieu réactionnel ; l'étape (2) est une hydrolyse humide se déroulant à une température comprise entre 10 et 50°C ; et l'étape (3) est une hydrolyse à l'aide d'une solution aqueuse diluée dont la teneur en eau est supérieure ou égale à 90 % en poids.

2. Procédé selon la revendication 1, caractérisé en ce qu'il est mis en oeuvre en continu.

3. Procédé selon la revendication 2 caractérisé en ce que l'étape (1) d'hydrolyse sous pression se décompose en :
Δ au moins une hydrolyse (1₁) d'organohalosilanes (I) conduisant à un hydrolysat brut au moins triphasique comprenant :
- une phase gazeuse formée par l'halogénure d'hydrogène gazeux sous pression,
- un fluide siloxane F₁ constitué essentiellement d'oligomères linéaires α,ω-dihalogénés et éventuellement, dans une moindre mesure, d'oligomères cycliques,
- et une phase aqueuse comportant la solution S₁ saturée d'halogénure d'hydrogène ;
Δ au moins une séparation (1₂) Gaz/Liquide visant à recueillir l'halogénure d'hydrogène gazeux sous pression d'une part, et un mélange F₁/S₁ d'autre part ;
Δ au moins une séparation (1₃) Liquide / Liquide permettant de récupérer F₁ et S₁, cette dernière étant recyclée en (1₁) ;
Δ éventuellement au moins une purification (1₄) du gaz recueilli en (1₂) ;
Δ et éventuellement au moins un dégazage (1₅) supplémentaire du fluide F₁ recueilli en (1₃).

4. Procédé selon la revendication 3, caractérisé en ce que l'étape (1₁) d'hydrolyse s'effectue sous agitation dans au moins une enceinte close, à une température comprise entre 10 et 50° C, et sous une pression régulée en halogénure d'hydrogène gazeux, supérieure ou égale à 0,10 MPa ; le rapport massique de phase à l'alimentation RM₁ = *phase aqueuse / organohalosilane (I)* étant supérieur ou égal à 2.

5. Procédé selon la revendication 3 ou 4, caractérisé en ce que la durée de la réaction d'hydrolyse de l'étape (1₁) est comprise entre 30 s et 5 min.

6. Procédé selon l'une quelconque des revendications 1 à 5 caractérisé en ce que l'étape (2) comprend au moins une hydrolyse humide (2₁) se déroulant, sous agitation, à une température comprise entre 10 et 50° C et dans laquelle le fluide siloxane F₁ issu de l'étape (1) est mis à réagir avec une solution aqueuse concentrée S₂, dont le soluté est l'halogénure d'hydrogène :
- la concentration de ce soluté dans S₂ correspondant à une fraction de la concentration de saturation de référence (Csr), du même soluté dans une solution aqueuse, et ce dans les mêmes conditions de température et de pression, cette fraction représentant 45 à 75 % de Csr,
- le rapport massique de phase à l'alimentation RM₂ = *phase aqueuse / Fluide F*_{*1*} étant régulé à une valeur supérieure ou égale à 1,5, de manière à permettre l'hydrolyse des liaisons ≡SiX du fluide siloxane F₁, à hauteur d'au moins 95 %, et à obtenir ainsi un fluide siloxane F₂ constitué essentiellement d'oligomères linéaires α,ω-dihydroxylés ou α,ω-dihalogénés et, éventuellement, dans une moindre mesure d'oligomères cycliques.

7. Procédé selon la revendication 6, caractérisé en ce que la durée de la réaction d'hydrolyse humide (2₁) est comprise entre 4 et 20 min.

8. Procédé selon la revendication 6 ou 7, caractérisé en ce que l'étape (2) comporte, en outre au moins une opération de séparation (2₂) du fluide siloxane F₂ issu de (2₁) de la solution aqueuse concentrée S₂, cette dernière étant au moins en partie recyclée dans l'hydrolyse sous pression (1₁) de l'étape (1) et/ou dans l'hydrolyse humide (2₁) de l'étape (2), à titre d'appoint en eau d'hydrolyse.

9. Procédé selon l'une quelconque des revendications 1 à 8 ou la revendication 6, caractérisé en ce que l'étape (3) comprend au moins un traitement (3₁) d'hydrolyse poussée du fluide siloxanique F₂ obtenu en (2), à l'aide d'une phase aqueuse en solution aqueuse diluée S₃, dont la teneur en eau est supérieur ou égale à 90 % en poids, les quantités de F₂ et S₃ mises en oeuvre en (3₁) étant ajustées de telle sorte que le rapport massique de phase à l'alimentation RM₃ = *phase aqueuse / Fluide F*₂ *(silox acide)* soit supérieur ou égal à 1,5, ledit traitement (3₁) permettant ainsi de finir l'hydrolyse des liaisons ≡Si-X résiduelles dans F₂, qui se trouve alors transformé en fluide siloxane F₃, constitué essentiellement d'oligomères linéaires α,ω-dihydroxylés et dans une moindre mesure d'oligomères cycliques.

10. Procédé selon la revendication 9, caractérisé en ce que la phase aqueuse S₃ comprend un soluté qui est présent à raison d'au plus 10 % en poids de la phase aqueuse, et comprend majoritairement au moins un sel et éventuellement minoritairement au moins un agent acide ou basique.

11. Procédé selon la revendication 10, caractérisé en ce que le sel présent est incorporé directement dans la phase aqueuse et/ou est généré in situ par neutralisation de tout ou partie de l'halogénure d'hydrogène présent à l'aide d'au moins un agent basique.

12. Procédé selon l'une quelconque des revendications 9 à 11, caractérisé en ce que l'étape (3₁) se déroule à une température supérieure ou égale à 60°C.

13. Procédé selon l'une quelconque des revendications 9 à 12, caractérisé en ce que l'étape (3) comporte, en sus, au moins une opération de séparation (3₂) du fluide siloxane F₃ issu de (3₁) de la phase aqueuse, cette dernière, une fois récupérée, étant au moins en partie recyclée au moins dans l'étape (3₁).

14. Procédé selon l'une quelconque des revendications 1 à 13, caractérisé en ce qu'il comprend une étape (4) de coalescence de F₃ issu de (3₂) consistant à faire passer F₃ au travers d'un matériau poreux, de façon à extraire les gouttelettes de phase aqueuse acide contenues dans F₃ et à obtenir un fluide siloxane F₄ constitué essentiellement d'oligomères linéaires α,ω-dihydroxylés, ayant une teneur en halogène résiduel inférieure ou égale à 10 ppm, et dans une moindre mesure d'oligomères cycliques.

15. Procédé selon la revendication 14, caractérisé en ce que le matériau poreux est sélectionné dans le groupe suivant :
- silices de précipitation, supports fibreux tissés ou non,
- des zéolithes,
- et leurs mélanges.

16. Procédé selon l'une quelconque des revendications 9 à 15, caractérisé en ce que les fluides siloxanes F₃ et F₄ présentent une viscosité à 25° C inférieure ou égale à 50 mPa.s.

17. Procédé selon l'une quelconque des revendications 1 à 16 caractérisé en ce que l'halogène X = Cl.

18. Procédé selon la revendication 17, caractérisé en ce que l'organohalosilane de départ est Me₂SiCl₂, Me SiCl₃ ou Me₃SiCl.

## Patentansprüche

1. Verfahren zur Herstellung von Polyorganosiloxanen durch Hydrolyse von Organohalogensilanen der Formel (I) RₐR¹_{b}SiX_{c}, in der:
- R und R¹ gleiche oder verschiedene Reste sind, die Wasserstoff oder geradkettige oder verzweigte C₁-C₆-Alkyle, Aryle, Alkylaryle oder Arylalkyle darstellen,
- X ein Halogen darstellt und
- a + b + c = 4 und 0 < 0 < 4;
dadurch gekennzeichnet,
• daß es in der Durchführung folgender Schritte besteht:
■ mindestens dreier aufeinanderfolgender Hydrolyseschritte (1), (2) und (3), in denen das Reaktionsmilieu geeignet ist, eine steigende hydrolysierende Kraft auf die Organohalogensilane (**I**) auszuüben, indem die Reaktivität der wässerigen Phase gegenüber ≡SiX-Bindungen von Hydrolyseschritt zu Hydrolyseschritt erhöht wird,
und
■ gegebenenfalls mindestens eines Koaleszenz-Schritts (4),
und
• daß Schritt (1) eine unter Druck und in Gegenwart einer bei dem Druck und der Temperatur, die das Reaktionsmedium aufweist, gesättigten wässerigen Halogenwasserstofflösung S₁ durchgeführte Hydrolyse ist, Schritt (2) eine bei einer Temperatur von 10 bis 50 °C durchgeführte nasse Hydrolyse ist und Schritt (3) eine mit Hilfe einer verdünnten wässerigen Lösung, deren Wassergehalt größer oder gleich 90 Gew.-% ist, durchgeführte Hydrolyse ist.

2. Verfahren nach Anspruch 1, dadurch gekennzeichnet, daß es kontinuierlich durchgeführt wird.

3. Verfahren nach Anspruch 2, dadurch gekennzeichnet, daß sich der unter Druck durchgeführte Hydrolyseschritt (1) aufgliedert in:
Δ mindestens eine Hydrolyse (1₁) von Organohalogensilanen (**I**), welche zu einem rohen Hydrolysat führt, das mindestens dreiphasig ist und das enthält:
- eine Gasphase, die aus gasförmigem, unter Druck stehendem Halogenwasserstoff gebildet wird,
- ein Siloxan-Fluid F₁, das im wesentlichen aus α,ω-dihalogenierten geradkettigen Oligomeren sowie gegebenenfalls einem geringeren Anteil an zyklischen Oligomeren besteht,
und
- eine wässerige Phase, die die gesättigte Halogenwasserstofflösung S₁ enthält;
Δ mindestens eine Gas-Flüssigkeits-Trennung (1₂) mit dem Ziel, zum einen den unter Druck stehenden gasförmigen Halogenwasserstoff und zum anderen ein Gemisch F₁/S₁ zu gewinnen;
Δ mindestens eine Flüssigkeits-Flüssigkeits-Trennung (1₃), durch die F₁ und S₁ gewonnen werden, wobei die Lösung S₁ in (1₁) zurückgeführt wird;
Δ gegebenenfalls mindestens einen Reinigungsschritt (1₄) des in (1₂) gewonnenen Gases
und
Δ gegebenenfalls mindestens einen zusätzlichen Entgasungsschritt (1₅) des in (1₃) gewonnenen Fluids F₁.

4. Verfahren nach Anspruch 3, dadurch gekennzeichnet, daß der Hydrolyse-Schritt (1₁) unter Rühren in mindestens einer geschlossenen Kammer bei einer Temperatur von 10 bis 50 °C und unter einem über den gasförmigen Halogenwasserstoff eingestellten Druck größer oder gleich 0,10 MPa durchgeführt wird, wobei das Massenverhältnis der eingespeisten Phase RM₁ = *wässerige Phase/Organohalogensilan (**I**)* größer oder gleich 2 ist.

5. Verfahren nach Anspruch 3 oder 4, dadurch gekennzeichnet, daß die Dauer der Hydrolysereaktion (1₁) im Bereich von 30 s bis 5 min liegt.

6. Verfahren nach einem der Ansprüche 1 bis 5, dadurch gekennzeichnet, daß Schritt (2) zumindest eine nasse Hydrolyse (2₁) einschließt, die unter Rühren bei einer Temperatur von 10 bis 50 °C durchgeführt wird und bei der das aus Schritt (1) stammende Siloxan-Fluid F₁ mit einer konzentrierten wässerigen Lösung S₂ umgesetzt wird, deren Solut der Halogenwasserstoff ist:
- die Konzentration dieses Soluts in S₂ entspricht einem Bruchteil von 45 bis 75% der als Referenz dienenden Sättigungskonzentration (Csr) desselben Soluts in einer wässerigen Lösung unter denselben Bedingungen in Bezug auf Temperatur und Druck,
- das Massenverhältnis der eingespeisten Phase RM₂ = *wässerige Phase / Fluid F*_{*1*} wird auf einen Wert größer oder gleich 1,5 eingestellt, derart, daß eine zumindest 95%ige Hydrolyse der ≡SiX-Bindungen des Siloxan-Fluids F₁ erzielt und damit ein Siloxan-Fluid F₂ erhalten wird, das im wesentlichen aus α,ω-dihydroxylierten oder α,ω-dihalogenierten geradkettigen Oligomeren sowie gegebenenfalls einem geringeren Anteil an zyklischen Oligomeren besteht.

7. Verfahren nach Anspruch 6, dadurch gekennzeichnet, daß die Dauer der nassen Hydrolysereaktion (2₁) im Bereich von 4 bis 20 min liegt.

8. Verfahren nach Anspruch 6 oder 7, dadurch gekennzeichnet, daß Schritt (2) zusätzlich mindestens einen Arbeitsschritt (2₂) einschließt, der darin besteht, das aus (2₁) stammende Siloxan-Fluid F₂ von der konzentrierten wässerigen Lösung S2 zu trennen, wobei letztere zumindest teilweise als zusätzliches Hydrolysewasser in die unter Druck durchgeführte Hydrolyse (1₁) des Schritts (1) und/oder in die nasse Hydrolyse (2₁) des Schritts (2) zurückgeführt wird.

9. Verfahren nach einem der Ansprüche 1 bis 8 oder Anspruch 6, dadurch gekennzeichnet, daß Schritt (3) mindestens eine mit Hilfe einer wässerigen Phase in verdünnter wässeriger Lösung S₃, deren Wassergehalt größer oder gleich 90 Gew.-% ist, durchgeführte, forcierte Hydrolysebehandlung (3₁) des in (2) erhaltenen Siloxan-Fluids F2 einschließt, wobei die in dieser Hydrolysebehandlung (3₁) eingesetzten Mengen an F₂ und S₃ so gewählt werden, daß das Massenverhältnis der eingespeisten Phase RM₃ = *wässerige Phase /Fluid F*_{*2*} *(saures Silox)* größer oder gleich 1,5 ist, derart, daß diese Behandlung (3₁) die Vervollständigung der Hydrolyse der noch vorhandenen ≡SiX-Bindungen in F₂ ermöglicht, das dann zu dem Siloxan-Fluid F₃ umgesetzt wird, das im wesentlichen aus α,ω-dihydroxylierten geradkettigen Oligomeren sowie einem geringeren Anteil an zyklischen Oligomeren besteht.

10. Verfahren nach Anspruch 9, dadurch gekennzeichnet, daß die wässerige Phase S₃ ein Solut enthält, das in einem Mengenanteil von maximal 10 Gew.-% der wässerigen Phase vorliegt, und daß die wässerige Phase S₃ in der Hauptsache mindestens ein Salz und gegebenenfalls mindestens ein in geringen Mengen vorliegendes saures oder basisches Mittel enthält.

11. Verfahren nach Anspruch 10, dadurch gekennzeichnet, daß das vorliegende Salz direkt zu der wässerigen Phase gegeben und/oder durch Neutralisieren des gesamten oder einer Teilmenge des vorliegenden Halogenwasserstoffs mit Hilfe mindestens eines basischen Mittels in situ gebildet wird.

12. Verfahren nach einem der Ansprüche 9 bis 11, dadurch gekennzeichnet, daß Schritt (3₁) bei einer Temperatur größer oder gleich 60 °C durchgeführt wird.

13. Verfahren nach einem der Ansprüche 9 bis 12, dadurch gekennzeichnet, daß Schritt (3) zusätzlich mindestens einen Arbeitsschritt (3₂) einschließt, der darin besteht, das aus (3₁) stammende Siloxan-Fluid F3 von der wässerigen Phase zu trennen, wobei letztere nach der Gewinnung zumindest teilweise zumindest in Schritt (3₁) zurückgeführt wird.

14. Verfahren nach einem der Ansprüche 1 bis 13, dadurch gekennzeichnet, daß es einen Koaleszenz-Schritt (4) des aus (3₂) stammenden F₃ einschließt, der darin besteht, F₃ ein poröses Material passieren zu lassen, um in F₃ enthaltene Tröpfchen der sauren wässerigen Phase zu extrahieren und ein Siloxan-Fluid F₄ zu erhalten, das im wesentlichen aus α,ω-dihydroxylierten geradkettigen Oligomeren, die einen Restgehalt an Halogen kleiner oder gleich 10 ppm aufweisen, sowie einem geringerem Anteil an zyklischen Oligomeren besteht.

15. Verfahren nach Anspruch 14, dadurch gekennzeichnet, daß das poröse Material aus folgender Reihe ausgewählt ist:
- Fällungs-Kieselgelen, gewebten oder nicht gewebten, faserigen Trägern,
- Zeolithen und
- deren Gemischen.

16. Verfahren nach einem der Ansprüche 9 bis 15, dadurch gekennzeichnet, daß die Siloxan-Fluide F₃ und F₄ bei 25 °C eine Viskosität kleiner oder gleich 50 mPa • s aufweisen.

17. Verfahren nach einem der Ansprüche 1 bis 16, dadurch gekennzeichnet, daß das Halogen X Chlor ist.

18. Verfahren nach Anspruch 17, dadurch gekennzeichnet, daß das Organohalogensilan, von dem ausgegangen wird, Me₂SiCl₂, MeSiCl₃ oder Me₃SiCl ist.

## Claims

1. Process for the preparation of polyorganosiloxanes by hydrolysis of organohalosilanes of formula (I) RₐR¹_{b}SiX_{c}, in which:
- R and R¹ are identical or different radicals representing hydrogen or linear or branched C₁-C₆ alkyls, aryls, alkylaryls or aralkyls,
- X represents a halogen,
- and a+b+c = 4 and 0 < c < 4;
characterized
• in that it consists in using:
■ at least three successive hydrolysis steps (1), (2), (3), in which the reaction medium is capable of exerting an increasing hydrolysing force on the organohalosilanes (I), by increasing the reactivity of the aqueous phase with respect to the ≡SiX bonds gradually as the hydrolysis steps proceed,
■ and, optionally, at least one coalescence step (4),
• and in that: step (1) is a hydrolysis under pressure in the presence of an aqueous solution S₁ of saturated hydrogen halide, at the pressure and temperature of the reaction medium; step (2) is a wet hydrolysis taking place at a temperature of between 10 and 50°C;
and step (3) is a hydrolysis using a dilute aqueous solution whose water content is greater than or equal to 90% by weight.

2. Process according to claim 1, characterized in that it is carried out continuously.

3. Process according to claim 2, characterized in that step (1) of hydrolysis under pressure consists of:
Δ at least one hydrolysis (1₁) of organohalosilanes (I) leading to an at least three-phase crude hydrolysate comprising:
- a gas phase formed of hydrogen halide gas under pressure,
- a siloxane fluid F₁ consisting essentially of linear α,ω-dihalo oligomers and, optionally, to a lesser extent, of cyclic oligomers,
- and an aqueous phase containing the solution S₁ saturated with hydrogen halide;
Δ at least one gas/liquid separation (1₂) intended to collect the hydrogen halide gas under pressure, on the one hand, and an F₁/S₁ mixture, on the other hand;
Δ at least one liquid/liquid separation (1₃) allowing recovery of F₁ and S₁, the latter being recycled into (1₁) ;
Δ optionally at least one purification (1₄) of the gas collected in (1₂);
Δ and optionally at least one additional degassing (1₅) of the fluid F₁ collected in (1₃).

4. Process according to claim 3, characterized in that hydrolysis step (1₁) is carried out with stirring in at least one closed chamber, at a temperature of between 10 and 50°C, and at a controlled pressure of hydrogen halide gas, greater than or equal to 0.10 MPa; the mass ratio of phase to supply MR₁ = *aqueous phase/organohalosilane (I)* being greater than or equal to 2.

5. Process according to claim 3 or 4, characterized in that the duration of the hydrolysis reaction of step (1₁) is between 30 s and 5 min.

6. Process according to any one of claims 1 to 5, characterized in that step (2) comprises at least one wet hydrolysis (2₁) which takes place, with stirring, at a temperature of between 10 and 50°C and in which the siloxane fluid F₁ obtained after step (1) is reacted with a concentrated aqueous solution S₂, the solute of which is the hydrogen halide:
- the concentration of this solute in S₂ corresponding to a fraction of the reference saturation concentration (Csr), of the same solute in an aqueous solution, and under the same temperature and pressure conditions, this fraction representing 45 to 75% of Csr,
- the mass ratio of phase to supply MR₂ = *aqueous phase/fluid F*_{*1*} being adjusted to a value greater than or equal to 1.5, so as to allow the hydrolysis of the ≡SiX bonds of the siloxane fluid F₁, to a level of at least 95%, and thereby to obtain a siloxane fluid F₂ consisting essentially of linear α,ω-dihydroxylated or α,ω-dihalo oligomers and, optionally, to a lesser extent, of cyclic oligomers.

7. Process according to claim 6, characterized in that the duration of the wet hydrolysis reaction (2₁) is between 4 and 20 min.

8. Process according to claim 6 or 7, characterized in that step (2) also includes at least one separation operation (2₂) of the siloxane fluid F₂ obtained from (2₁), from the concentrated aqueous solution S₂, the latter being at least partly recycled into the hydrolysis under pressure (1₁) of step (1) and/or into the wet hydrolysis (2₁) of step (2), as a supply of hydrolysis water.

9. Process according to any one of claims 1 to 8 or claim 6, characterized in that step (3) comprises at least one treatment (3₁) of thorough hydrolysis of the siloxane fluid F₂ obtained in (2), using an aqueous phase as a dilute aqueous solution S₃, the water content of which is greater than or equal to 90% by weight, the amounts of F₂ and S₃ used in (3₁) being adjusted such that the mass ratio of phase to supply MR₃ *= aqueous phase/fluid F*₂ *(acidic silox) is* greater than or equal to 1.5, the said treatment (3₁) thus making it possible to complete the hydrolysis of the residual ≡Si-X bonds in F₂, which is then converted into siloxane fluid F₃, consisting essentially of linear α,ω-dihydroxylated oligomers and, to a lesser extent, of cyclic oligomers.

10. Process according to claim 9, characterized in that the aqueous phase S₃ comprises a solute which is present in a proportion of not more than 10% by weight of the aqueous phase, and mainly comprises at least one salt and optionally, in a minor amount, at least one acidic or basic agent.

11. Process according to claim 10, characterized in that the salt present is incorporated directly into the aqueous phase and/or is generated in situ by neutralization of all or part of the hydrogen halide present, using at least one basic agent.

12. Process according to any one of claims 9 to 11, characterized in that step (3₁) takes place at a temperature above or equal to 60°C.

13. Process according to any one of claims 9 to 12, characterized in that, in addition, step (3) includes at least one separation operation (3₂) of the siloxane fluid F₃ obtained from (3₁), from the aqueous phase, the latter, once recovered, being at least partly recycled at least into step (3₁).

14. Process according to any one of claims 1 to 13, characterized in that it comprises a step (4) of coalescence of F₃ obtained from (3₂) which consists in passing F₃ through a porous material so as to extract the droplets of acidic aqueous phase contained in F₃ and to obtain a siloxane fluid F4 consisting essentially of linear α,ω-dihydroxylated oligomers having a residual halogen content of less than or equal to 10 ppm, and, to a lesser extent, of cyclic oligomers.

15. Process according to claim 14, characterized in that the porous material is selected from the following group:
- precipitation silicas, woven or nonwoven fibrous supports,
- zeolites,
- and mixtures thereof.

16. Process according to any one of claims 9 to 15, characterized in that the siloxane fluids F₃ and F₄ have a viscosity at 25°C of less than or equal to 50 mPa.s.

17. Process according to any one of claims 1 to 16, characterized in that the halogen X = Cl.

18. Process according to claim 17, characterized in that the starting organohalosilane is Me₂SiCl₂, MeSiCl₃ or Me₃SiCl.
